# EUROPEAN PATENT SPECIFICATION

(11) **EP 0 390 764 B1**
(45) Date of publication and mention of the grant of the patent: **09.11.1994**
(21) Application number: 90850117.4
(22) Date of filing: 28.03.1990
(51) Int. Cl.: B65G 35/00, B61B 10/02

(54) **Method and device for separating carriages in an overhead conveyor system and for accumulating such carriages in a buffer store**
Verfahren und Vorrichtung zum Trennen von Wagen in einem Hängefördersystem und zur Pufferlagerung von solchen Wagen
Procédé et dispositif pour séparer des chariots d'un système de transport aérien et pour accumuler temporairement de tels chariots

(30) Priority: 31.03.1989 SE 8901132
(43) Date of publication of application: 03.10.1990
(73) Proprietor: OCS Overhead Conveyor System Aktiebolag, 502 47 Boras (SE)
(72) Inventor: Persson, Bengt Anders Walle, S-502 53 Boras (SE); Lundgren, Jan-Erik, S-135 52 Tyresö (SE); Holmberg, Göran Ingvar, S-171 35 Solna (SE)
(74) Representative: Rostovanyi, Peter

(56) References cited:
- WO-A-88/04641
- DE-A- 3 218 012
- FI-B- 77 412
- GB-A- 1 326 699
- US-A- 2 751 851

## Description

The present invention is directed to separation of carriages included in an overhead conveyor system and suspended on a track-forming shaft which is rotated and thus propels said carriages along the track. More precisely, the invention relates to a method and a device of the type stated in the preamble of appended claims 1 and 4, respectively. The invention also relates to an assembly for accumulating in a buffer store such carriages in an overhead conveyor system.

Conveyor systems with suspended carriages are well-known, and one example is the system disclosed in WO-A-88/04641. Especially Fig. 2 in this publication illustrates how the carriages are suspended on the rotatable conveying shaft via inclined rollers which thus are in frictional and rolling contact with the shaft.

A problem in such overhead conveyor systems is that the carriages easily come too close together, which jeopardises the function of the system and makes it difficult to divert carriages to branch tracks etc. It also happens that the carriages collide and, if it comes to the worst, get caught on each other.

Attempts at coping with this problem have previously been made by dividing the rotary propelling shaft into a plurality of successive sections driven by separate motors. The junction formed between two sections of the assembled propelling shaft, i.e. the point at which two opposite ends of two neighbouring shaft sections meet, may be said to constitute a separating device which functions in the following manner.

First, it is established by means of electric switches that two successive carriages are too close to one another and therefore should be separated. When the leading one of these two carriages passes said junction, the rear shaft section with respect to the junction stops, whereby the trailing carriage is stopped. However, the front shaft section with respect to the junction continues rotating and propels the leading carriage, and as a result the spacing between the carriages increases. The leading carriage then passes a further electric switch which starts the trailing shaft section such that the rear carriage becomes driven again.

This prior art solution suffers from a number of obvious drawbacks since the propelling shaft must consist of several sections some of which are stopped temporarily and therefore must be driven separately and be controlled by a number of electric switches. The prior art method of separating carriages therefore is most complicated and costly owing to the extensive electric and drive equipment. Moreover, the entire conveyor system as such is difficult to control. There is thus a need for a simple, inexpensive, reliable and substantially mechanically operating separating device.

Another problem which is closely associated with said separation is accumulation of carriages in a buffer store in the overhead conveyor system. A known solution to this problem is to divert the carriages from a main track to a branch track or buffer track consisting of a rotary shaft of the type described above. The carriages thus are supplied onto the buffer track from behind, switches sensing the passing carriages and stopping or starting the rotary shaft, as required. When a carriage should be fed out from the front end of the buffer track, which frequently is but half-filled, an entire "train" of carriages must thus be propelled along the buffer track until the leading carriage can be fed out. Additional switches sense and control the feeding-out operation. It will be appreciated that this type of accumulation in a buffer store is most impractical and also time-consuming.

When trying to overcome the above-mentioned buffer problem, it has been suggested, as discussed by way of introduction, to divide the buffer track into separate shaft sections for separating purposes. This solution of course suffers from the drawback that it requires a plurality of separate electric and motor drives as well as a large number of electric switches, which makes the entire system expensive and causes controlling problems.

The prior art technique also includes a very simple type of buffer device consisting of an inclined, fixed and thus non-driven track on which the carriages are suspended in succession and fed out one by one. This device suffers from several drawbacks, only two of which should however be mentioned here. First, a high pressure is exerted upon the leading carriage when a long "train" is suspended on the buffer track. Therefore powerful brake means are required along the track. Secondly, the buffer track must be relatively steeply inclined to function adequately, for which reason it takes up much space in the vertical direction. It may thus be established that at present there is no satisfactory solution to the problem with accumulation of carriages in overhead conveyor systems.

In view of the above description of prior art and the problems connected therewith, the objects of the present invention, while obviating the above-mentioned drawbacks, are to provide:
- a rational method for separating successive carriages in an overhead conveyor system, without necessitating stopping of the propelling shaft,
- a rational method for accumulating the carriages in a buffer store,
- a device included in such an overhead conveyor system and adapted to separate carriages which follow too closely upon each other, without necessitating stopping of the rotary propelling shaft, while using only a small number of electric and drive units, and
- an assembly for accumulating carriages in a buffer store by means of a plurality of successively positioned separating devices.

According to the present invention, these objects are achieved by a method of the type mentioned by way of introduction, which besides has the features stated in the characterising clause of appended claim 1. The objects are also achieved by means of a device of the type defined by way of introduction and characterised by that stated in the characterising clause of appended claim 4. Moreover, the objects are achieved by means of an assembly according to appended claim 8. Preferred embodiments of the invention are stated in the appended subclaims.

The invention will now be described in more detail by means of some embodiments and with reference to the accompanying drawing in which Figs 1 and 2 are side views of a separating device designed according to the invention and shown in two different operating positions, Figs 3 and 4 illustrate a front separating device in an accumulating assembly designed according to the invention, in two different operating positions, and Fig. 5 is a schematic perspective view of a portion of the entire accumulating assembly as seen obliquely from in front.

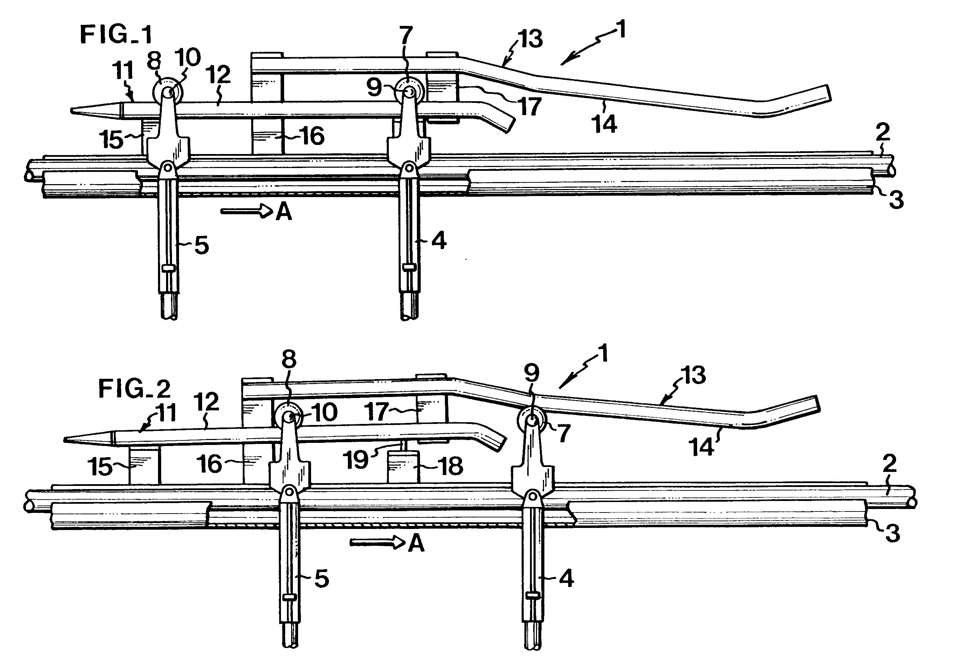

Figs 1 and 2, to which reference is first made, illustrate a separating device according to the invention, generally designated 1. The device 1 is included in an overhead conveyor system of which a portion is shown in Figs 1 and 2 and which in known manner comprises a rotatable propelling shaft 2 which is supported by and in a U-beam 3 by means of mounts (not shown).

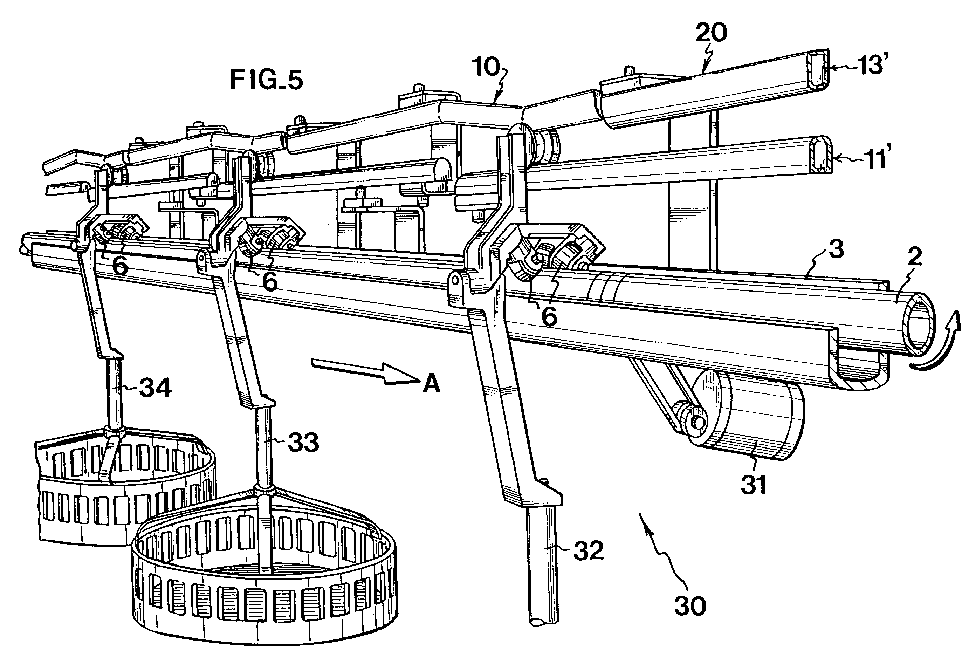

The U-beam 3 is partly broken away, thereby better illustrating how two carriages 4, 5 are suspended on the shaft 2 via inclined rollers 6 which are best seen in Fig. 5. The rollers 6 are in known manner in frictional and rolling contact with the shaft 2 which by its rotation propels the carriages 4, 5 along the track in a direction of propulsion indicated by an arrow A. Further the carriages 4, 5 each have at least one overlying support wheel 7 and 8, respectively, adapted to roll freely on a non-driven track, the axles 9, 10 of said wheels extending at right angles to the shaft 2 and being positioned at a given distance from the upper side of the shaft 2.

The actual separating device 1 comprises two main components, viz. a first means in the form of a lower rail 11 having an upwardly directed rolling track 12 on which the support wheels 8, 9 can roll with the carriages 4, 5 suspended, and a second means in the form of an upper rail 13 having a downwardly directed rolling track 14 on which the support wheels 7, 8 can roll from underneath. The front part of the upper rail 13, as seen in the direction of propulsion A, is designed in such a manner that the distance between the downwardly directed rolling track 14 thereof and the upper side of the shaft 2 decreases in the forward direction. On considering the leading carriage 4 in the device 1 (Fig. 1), it appears that the distance between the downwardly directed rolling track 14 of the upper rail 13 and the upper side of the shaft 2 is greater than the sum of the radius of the support wheel 7 and the distance between the axle 9 of the support wheel 7 and the upper side of the shaft 2. However, in the front part of the upper rail 13 (Fig. 2) the distance between the rolling track 14 and the upper side of the shaft 2 is smaller than the distance between the axle 9 of the support wheel 7 and the upper side of the shaft 2. The reason for this will be apparent from the following.

The two rails 11, 13 and the shaft 2 are substantially located in a common vertical plane. Moreover, the lower rail 11 is hingedly mounted on a holder 15 which is attached to the U-beam 3, while the upper rail 13 is hingedly mounted on a further holder 16 which is also attached to the U-beam 3. The two rails 11, 13 are further interconnected by means of a stirrup 17 which will be described in greater detail below.

The separating device 1 functions in the following manner. The two carriages 4, 5 which should be separated, are moved into the device 1 in the direction of the arrow A by the rolling contact of the rollers 6 with the rotary shaft 2. Inside the device 1, the support wheels 7, 8 of the carriages 4, 5 are positioned directly above or in light rolling contact with the rolling track 12 of the lower rail 11. As the leading carriage 4 is advanced further, its support wheels 7 are caused to come into rolling contact from underneath with the rolling track 14 of the upper rail 13 and begin to raise this rail away from the shaft 2 (see Fig. 2). The leading carriage 4 continues being advanced through the device 1 and raises the rail 13 further, because the front part thereof is bent towards the shaft 2. Since the upper rail 13 is connected with the lower rail 11 by means of the stirrup 17, also the front end of the lower rail 11 will be raised. This means that the support wheels 8 of the trailing carriage 5 are caused to roll on the rolling track 12 of the lower rail 11, which thus is inclined upwards. Owing to this raising of the lower rail 11, the rollers 6 of the trailing carriage 5 are moved out of rolling contact with the rotary shaft 2 and therefore are stopped temporarily, suspended on the lower rail 11, as shown in Fig. 2. The trailing carriage 5 thus is stopped or braked and can also roll slightly backwards, while the leading carriage 4 continues being propelled by the shaft 2, thereby increasing the spacing between the two carriages 4, 5.

Thus, the separation is effected in that the trailing carriage 5 is moved out of its rolling contact with the shaft 2, whereas the leading carriage 4 is advanced through the device 1 at a substantially constant speed and with its rollers 6 in continuous rolling contact with the shaft 2. When the leading carriage 4 has passed the device 1, the upper rail 13 and, consequently, also the lower rail 11 are, automatically and by their own weight, lowered back to the starting position, such that the rollers 6 of the trailing carriage 5 are again in rolling contact with the shaft 2 and the carriage becomes advanced through the device 1. Below the lower rail 11, an angular member 18 is mounted on the U-beam 3, a guide pin 19 extending upwardly from said angular member for engagement into a hole (not shown) in the rail 11. It will be appreciated that a number of successive carriages can be separated in that the procedure is repeated while the rotary shaft 2 is continuously driven and thus need not be stopped.

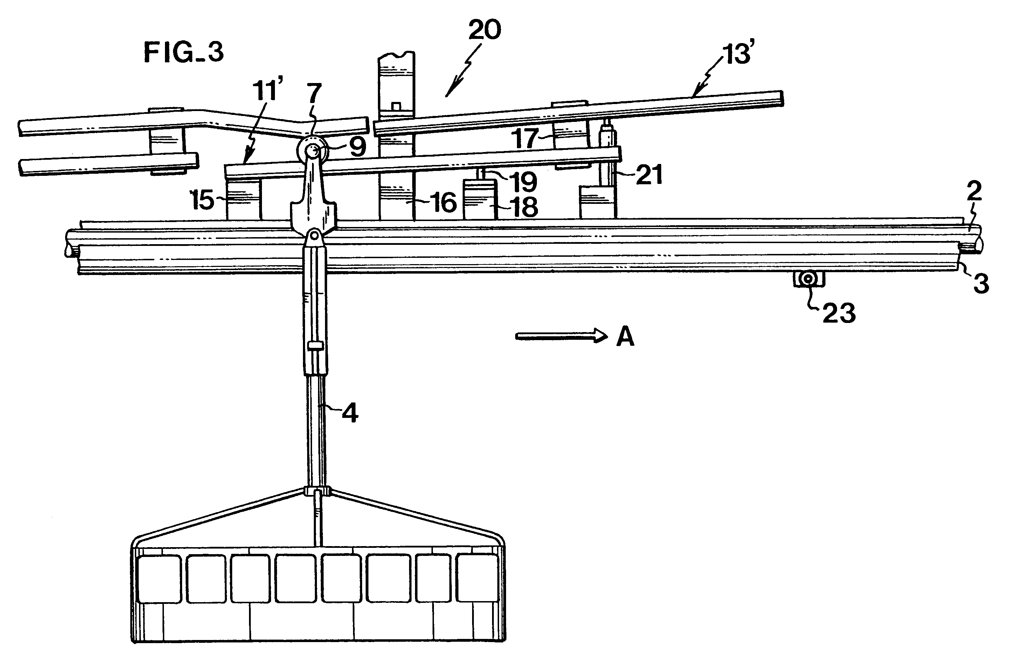

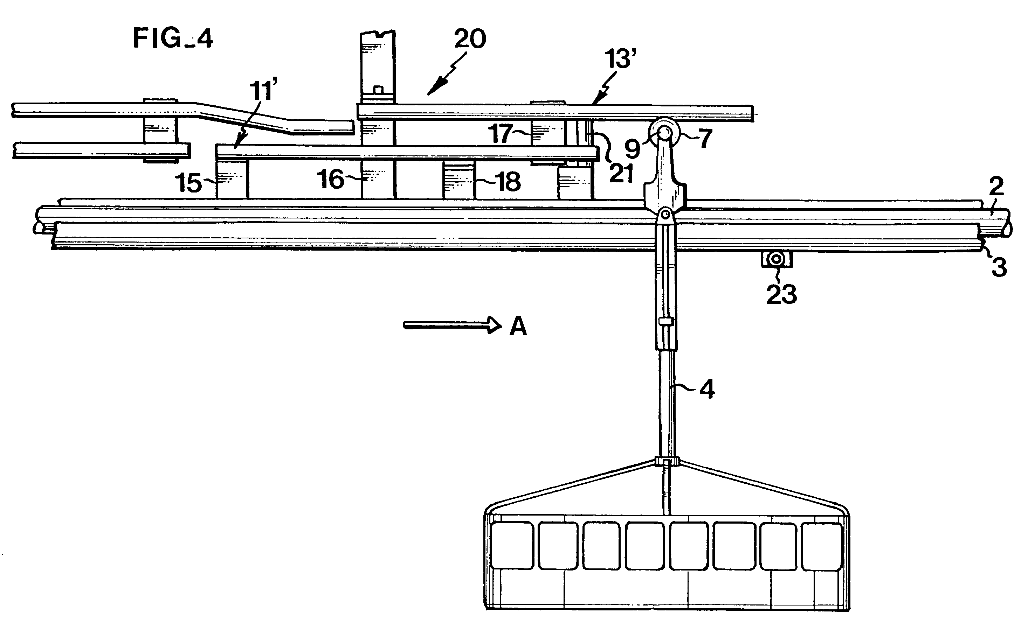

Figs 3 and 4, to which reference is now made, illustrate a similar separating device generally designated 20. This device 20 preferably is included in an accumulating assembly which will be described below. In this case the upper rail 13′ is raised by an operating means which here is in the shape of a compressed-air piston-and-cylinder assembly 21. Fig. 3 shows the upper rail 13′ in a raised, inclined position, also the lower rail 11′ being raised and inclined. A carriage which in this case is represented by the above-mentioned leading carriage 4 is kept raised from the rotary shaft 2 and thus is suspended on the lower rail 11′ by its support wheel 7. The support wheel 7 is clamped between the lower rail 11′ and an upper rail in a posteriorly situated separating device.

When the carriage 4 thus stopped should be propelled, the piston-and-cylinder assembly 21 is activated and pulls down the upper rail 13′, such that the rollers 6 of the carriage 4 are caused to come into rolling contact with the shaft 2 and the carriage becomes propelled (see Fig. 4). Subsequently, the carriage 4 passes a transducer 23 mounted on the U-beam 3, which activates the piston-and-cylinder 21 which again raises the upper rail 13′. The device 20 is prepared to temporarily stop the next carriage which rolls onto the lower rail 11′.

The separating devices 1 and 20 described above are advantageously used in accumulation of suspended carriages in a buffer store, as shown in Fig. 5 in which the components already described have been provided with the same reference numerals. Fig. 5 also illustrates a motor 31 for driving the rotary shaft 2.

In the foremost end of such an accumulating assembly 30 (see Fig. 5), there is a separating device 20 which is of the type illustrated in Figs 3 and 4 and which thus is controlled by the piston-and-cylinder assembly 21 and the transducer 23. Behind this foremost separating device 20, there are positioned a number of separating devices 10 which in every essential respect conform with the separating device 1 illustrated in Figs 1 and 2. The devices 10 are mechanically connected in series and controlled by the foremost device 20.

When a leading carriage 32 should be fed out from the accumulating assembly 30, the piston-and-cylinder assembly 21 (see Figs 3 and 4) is activated and pulls down the upper rail 13′ and, consequently, the lower rail 11′, so that the carriage 32 becomes propelled. When the carriage 32 is propelled along the lower rail 11′, the upper rail of the posteriorly situated separating device 10 and thus also the lower rail connected therewith are lowered, whereby a succeeding carriage 33 is propelled to the position that was earlier taken by the carriage 32. A carriage 34 following further behind will take the position that the carriage 33 had earlier taken etc. Such a rearward "chain reaction" in the assembly 30 is interrupted in that the fed-out carriage 32 passes the transducer 23 (see Figs 3 and 4) which activates the piston-and-cylinder assembly 21 which raises the upper rail 13′ of the foremost separating device 20.

In this manner, a most efficient accumulation is obtained, in which the carriages can be fed out one at a time, while the propelling shaft 2 is continuously rotated. As a result, the previously discussed drawbacks of the prior art accumulating assemblies are eliminated. In the assembly 30 according to the invention, the buffer track need not be divided into separately driven sections, but the shaft 2 is driven continuously by a single motor 31. Only a small number of control and operating means are required.

Finally it should be pointed out that the separating devices and the accumulating assembly can, for example, be timed in different manners according to the function and application of the conveyor system. The desired spacing between the carriages can e.g. be varied by using upper rails of different length in the separating devices which thus retain the carriages for a certain period proportionally to the desired spacing.

## Claims

1. A method for separating successive carriages (4, 5) which are included in an overhead conveyor system and which via rollers (6) are suspended on a track-forming shaft (2) which is rotated and thus propels the carriages along the track, each carriage having at least one over-lying support wheel (7, 8) adapted to roll freely on a non-driven track and spaced from the propelling shaft, **characterised** in that two successive carriages which should be separated are advanced through a separating device (1) which is arranged substantially in a vertical plane coinciding with that of said propelling shaft (2) and in which the leading carriage (4), as seen in the direction of propulsion (A), is driven at a substantially constant speed, its rollers being in continuous rolling contact with said propelling shaft, while the support wheels (8) of the trailing carriage (5), as seen in the direction of propulsion, are rolled onto a rail (11) positioned at a distance from and above said propelling shaft (2), the front end of said rail (11), as seen in the direction of propulsion, being raised so that said rail is inclined in said vertical plane, whereby the trailing carriage (5) is raised away from said propelling shaft and is stopped temporarily, and that said rail (11), after a certain time or after the leading carriage (4) has passed said separating device (1), is lowered again so that the rollers (6) of said trailing carriage (5) are lowered onto said propelling shaft and the trailing carriage becomes propelled anew.

2. The method as claimed in claim 1, wherein use is made of a further rail (13) which is positioned substantially in said vertical plane and at a distance above the first-mentioned rail (11) and connected thereto, the support wheels (7) of said leading carriage (4) being caused from below to roll on and to raise from below the further rail (13) which consequently raises the first-mentioned rail (11), such that said trailing carriage (5) is stopped temporarily.

3. The method as claimed in claim 1 or 2, wherein a plurality of separating devices are arranged in direct succession and mechanically connected in series after each other, thereby permitting accumulation of carriages in a buffer store, one carriage at a time being fed out from a foremost separating device, while the remaining carriages are advanced gradually to the anteriorly situated separating device.

4. A device included in an overhead conveyor system and adapted to separate at least two successive carriages (4, 5) which are suspended on a rotatable track-forming shaft (2) and which are each provided with rollers (6) which, as the carriage is propelled along the track, are in frictional and rolling contact with the propelling shaft (2), each carriage besides having at least one ever-lying support wheel (7, 8) adapted to roll freely on a non-driven track and spaced from said propelling shaft, the device comprising a first means (11) positioned at a distance from and above said propelling shaft and adapted to temporarily raise a trailing carriage (5), as seen in the direction of propulsion (A), by means of the support wheels (8) thereof, whereby said rollers (6) of the carriage (5) leave the propelling shaft (2), **characterised** by a second means (13) which is connected to said first means (11) and by which said first means (11) is movable between a first position in which it does not interfere with a passing carriage, and a second position in which the carriage is urged away from the driving contact with the propelling shaft (2).

5. The device as claimed in claim 4, wherein said first means comprises a first or lower rail (11) extending substantially in parallel with said propelling shaft (2) and having an upwardly directed rolling track (12) for said support wheels (7, 8), and wherein said second means comprises a second or upper rail (13) which is positioned at a distance from and above said first rail (11) and which has a rolling track (14) directed downwards to said first rail (11) and intended for said support wheels (7, 8), the two rails (11, 13) and said propelling shaft (12) being positioned substantially in a common vertical plane, and the two rails (11, 13) being hingedly mounted and interconnected in such a manner that their front ends, as seen in the direction of propulsion (A), are substantially simultaneously raisable away from said propelling shaft (2) for inclining said rails (11, 13) with respect to the shaft (2) in said vertical plane.

6. The device as claimed in claim 5, wherein said raising operation is effected in that the support wheels (7) of said leading carriage (4) roll on the downwardly directed rolling track (14) of said upper rail (13) with the rollers (6) in continuous rolling contact with said propelling shaft (2), whereas the support wheels (8) of the trailing carriage (5) roll on the upwardly directed rolling track (12) of said lower rail (11) with the rollers (6) out of contact with said propelling shaft (2), thereby permitting separation of the two carriages (4, 5).

7. The device as claimed in claim 5 or 6, wherein said upper rail (13), or a front part thereof, is designed in such a manner that the distance between the downwardly directed rolling track (14) thereof and said propelling shaft (2) decreases in the direction of propulsion (A).

8. An assembly for accumulating in a buffer store a plurality of suspended carriages (32-34) included in an overhead conveyor system, **characterised** in that said assembly (30) comprises a plurality of separating devices (10, 20) according to any one of claims 4-7.

9. The assembly as claimed in claim 8, wherein said separating devices (10, 20) are arranged in direct succession and mechanically connected in series so that one carriage at a time is feedable out from said assembly (30), while the remaining carriages in the assembly are gradually movable to the anteriorly situated seperating device.

10. The assembly as claimed in claim 8 or 9, wherein the foremost separating device (20), as seen in the direction of propulsion (A), comprises an operating means (21) for performing said raising operation of the first means (11').

11. The assembly as claimed in claim 10, including a transducer (23) which, as seen in the direction of propulsion (A), is positioned in front of the foremost separating device (20) and is adapted to activate said operating means (21), as the carriages are propelled past said transducer.

## Patentansprüche

1. Verfahren zum Trennen aufeinanderfolgender wagen (4, 5), die zu einem Hängefördersystem gehören und über Rollen (6) an einer spurbildenden Welle (2) hängen, die gedreht wird und somit die Wagen über die Spur befördert, wobei jeder wagen wenigstens ein obenliegendes Tragrad (7, 8) aufweist, das frei auf einer nichtangetriebenen Spur rollt und von der Antriebswelle beabstandet ist, **dadurch gekennzeichnet,** daß zwei aufeinanderfolgende Wagen, die getrennt werden sollen, durch eine Trennvorrichtung (1) befördert werden, die im wesentlichen in einer vertikalen Ebene angeordnet ist, die mit der der Antriebswelle (2) zusammenfällt, und in der der, in der Antriebsrichtung (A) gesehen, vordere Wagen (4) mit im wesentlichen konstanter Geschwindigkeit angetrieben wird, wobei seine Rollen in ständigem Rollkontakt mit der Antriebswelle sind, während die Tragräder (8) des, in der Antriebsrichtung gesehen, hinteren Wagens (5) auf eine Schiene (11) gerollt werden, die sich in einem Abstand von und oberhalb der Antriebswelle (2) befindet, wobei das, in der Antriebsrichtung gesehen, vordere Ende der Schiene (11) angehoben wird, so daß die Schiene in der vertikalen Ebene geneigt ist, wodurch der hintere wagen (5) von der Antriebswelle weg angehoben wird und zeitweilig angehalten wird, und daß die Schiene (11) nach einer bestimmten Zeit, oder wenn der vordere Wagen (4) die Trennvorrichtung (1) passiert hat, wieder abgesenkt wird, so daß die Rollen (6) des hinteren Wagens (5) auf die Antriebswelle abgesenkt werden und der hintere wagen erneut angetrieben wird.

2. Verfahren nach Anspruch 1, wobei eine weitere Schiene (13) eingesetzt wird, die im wesentlichen in der vertikalen Ebene und in einem Abstand oberhalb der zuerst erwähnten Schiene (11) und mit selbiger verbunden angeordnet ist, wobei die Tragräder (7) des vorderen Wagens (4) von unten an der weiteren Schiene (13) rollen und sie von unten anheben, wodurch die zuerst erwähnte Schiene (11) angehoben wird, so daß der hintere Wagen (5) zeitweilig angehalten wird.

3. Verfahren nach Anspruch 1 oder 2, wobei eine Vielzahl von Trennvorrichtungen direkt aufeinanderfolgend und in Reihe mechanisch verbunden nacheinander angeordnet sind, wodurch das Abstellen von Wagen in einer Zwischenabstelleinrichtung möglich ist, wobei jeweils ein Wagen aus einer vordersten Trennvorrichtung herausgefahren wird, während die restlichen Wagen allmählich zu der davor befindlichen Trennvorrichtung befördert werden.

4. Vorrichtung, die zu einem Hängefördersystem gehört, und wenigstens zwei aufeinanderfolgende Wagen (4, 5) trennt, die an einer drehbaren, spurbildenden Welle (2) hängen, und die jeweils mit Rollen (6) versehen sind, die, wenn der Wagen über die Spur befördert wird, in Reib- und Rollkontakt mit der Antriebswelle (2) sind, wobei jeder Wagen darüber hinaus wenigstens ein obenliegendes Tragrad (7, 8) aufweist, das frei auf einer nichtangetriebenen Spur und im Abstand zu der Antriebswelle rollt, wobei die Vorrichtung eine erste Einrichtung (11) umfaßt, die in einem Abstand zu und oberhalb der Antriebswelle angeordnet ist und einen, in der Antriebsrichtung (A) gesehen, hinteren Wagen (5) mittels der Tragräder (8) zeitweilig anhebt, wodurch die Rollen (6) des Wagens (5) die Antriebswelle (2) verlassen, **gekennzeichnet durch** eine zweite Einrichtung (13), die mit der ersten Einrichtung (11) verbunden ist, und mittels derer die erste Einrichtung (11) zwischen einer ersten Position, in der sie keinen Kontakt mit einem durchlaufenden Wagen hat, und einer zweiten Position, in der der Wagen aus dem Antriebskontakt mit der Antriebswelle (2) gedrückt wird, bewegt werden kann.

5. Vorrichtung nach Anspruch 4, wobei die erste Einrichtung eine erste oder untere Schiene (11) umfaßt, die im wesentlichen parallel zu der Antriebswelle (2) verläuft und eine nach oben gerichtete Rollspur (12) für die Tragräder (7, 8) aufweist, und wobei die zweite Einrichtung eine zweite oder obere Schiene (13) umfaßt, die in einem Abstand zu und oberhalb der ersten Schiene (11) angeordnet ist, und die eine Rollspur (14) aufweist, die auf die erste Schiene (11) zu nach unten gerichtet ist und für die Tragräder (7, 8) bestimmt ist, wobei die beiden Schienen (11, 13) und die Antriebswelle (12) im wesentlichen in einer gemeinsamen vertikalen Ebene angeordnet sind und die beiden Schienen (11, 13) so gelenkig angebracht und miteinander verbunden sind, daß ihre, in der Antriebsrichtung (A) gesehen, vorderen Enden im wesentlichen gleichzeitig von der Antriebswelle (2) weg angehoben werden können, um die Schienen (11, 13) in bezug auf die Welle (2) in der vertikalen Ebene zu neigen.

6. Vorrichtung nach Anspruch 5, wobei der Anhebevorgang dadurch ausgeführt wird, daß die Tragräder (7) des vorderen Wagens (4) auf der nach unten gerichteten Rollspur (14) der oberen Schiene (13) rollen, wobei die Rollen (6) in ständigem Rollkontakt mit der Antriebswelle (2) sind, während die Tragräder (8) des hinteren Wagens (5) auf der nach oben gerichteten Rollspur (12) der unteren Schiene (11) rollen, wobei die Rollen (6) nicht mit der Antriebswelle (2) in Kontakt sind, wodurch die beiden Wagen (4, 5) getrennt werden können.

7. Vorrichtung nach Anspruch 5 oder 6, wobei die obere Schiene (13) oder ein vorderer Teil derselben so konstruiert ist, daß der Abstand zwischen der nach unten gerichteten Rollspur (14) derselben und der Antriebswelle (2) in der Antriebsrichtung (A) abnimmt.

8. Baugruppe zum Abstellen einer Vielzahl von hängenden Wagen (32-34), die zu einem Hängefördersystem gehören, in einer Zwischenabstelleinrichtung, **dadurch gekennzeichnet,** daß die Baugruppe (30) eine Vielzahl von Trennvorrichtungen (10, 20) nach einem der Ansprüche 4-7 umfaßt.

9. Baugruppe nach Anspruch 8, wobei die Trennvorrichtungen (10, 20) direkt aufeinanderfolgend und in Reihe mechanisch verbunden angeordnet sind, so daß jeweils ein Wagen aus der Baugruppe (30) herausgefahren werden kann, während die restlichen Wagen in der Baugruppe allmählich zu der davor befindlichen Trennvorrichtung bewegt werden können.

10. Baugruppe nach Anspruch 8 oder 9, wobei die, in der Antriebsrichtung (A) gesehen, vorderste Trennvorrichtung (20) eine Betätigungseinrichtung (21) zum Ausführen des Anhebevorgangs der ersten Einrichtung (11') umfaßt.

11. Baugruppe nach Anspruch 10, die einen Wandler (23) enthält, der, in der Antriebsrichtung (A) gesehen, vor der vordersten Trennvorrichtung (20) angeordnet ist und die Betätigungseinrichtung (21) aktiviert, wenn die Wagen an dem Wandler vorbeibewegt werden.

## Revendications

1. Procédé pour séparer des chariots successifs (4, 5) qui sont inclus dans un système de convoyeur aérien et qui sont suspendus, par l'intermédiaire de galets (6) sur un arbre (2) formant une voie qui est entraîné en rotation et propulse ainsi les chariots le long de la voie, chaque chariot ayant au moins une roue d'appui supérieure (7, 8) adaptée pour rouler librenent sur une voie non entraînée et espacée de l'arbre propulseur, caractérisé en ce qu'on fait avancer deux chariots successifs qui doivent être séparés à travers un dispositif séparateur (1) qui est agencé sensiblement dans un plan vertical qui coïncide avec celui dudit arbre propulseur (2), et dans lequel le chariot avant (4), vu dans le sens de la propulsion (A), est entraîné à une vitesse sensiblement constante, ses galets étant en contact roulant continu avec ledit arbre propulseur, tandis que les roues d'appui (8) du chariot arrière (5), vu dans le sens de la propulsion, roulent sur un rail (11) placé à une certaine distance au-dessus dudit arbre propulseur (2), l'extrémité avant dudit rail (11), vue dans le sens de la propulsion étant relevée, de sorte que ledit rail est incliné dans ledit plan vertical, et que le chariot arrière (5) est soulevé dudit arbre propulseur et est arrêté temporairement, et en ce qu'après un certain temps, ou après que le chariot avant (4) a franchi ledit dispositif séparateur (1), ledit rail est de nouveau abaissé, de sorte que les galets (6) dudit chariot arrière (5) sont abaissés sur ledit arbre propulseur et que le chariot arrière est de nouveau propulsé.

2. Procédé selon la revendication 1, dans lequel on utilise un rail additionnel (13) qui est placé sensiblement dans ledit plan vertical et à une certaine distance au-dessus du rail (11) mentionné en premier lieu et assemblé à ce rail, les roues d'appui (7) dudit chariot avant (4) étant amenées à rouler par dessous contre le rail additionnel (13) et à soulever par dessous ce rail additionnel, lequel soulève par conséquent le rail (11) mentionné en premier lieu, de sorte que ledit chariot arrière (5) est arrêté temporairement.

3. Procédé selon la revendication 1 ou 2, dans lequel plusieurs dispositifs séparateurs sont disposés pour se succéder directement et reliés mécaniquement en série l'un à la suite de l'autre, en permettant ainsi de former une accumulation de chariots dans un magasin tampon, les chariots étant évacués un à un d'un dispositif séparateur extrême avant, tandis que les chariots restants sont avancés progressivement juqu'au dispositif séparateur situé dans une position antérieure.

4. Dispositif inclus dans un système convoyeur aérien et adapté pour séparer au moins deux chariots successifs (4, 5) qui sont suspendus sur un arbre rotatif (2) formant voie et qui sont munis chacun de galets (6) qui, lorsque le chariot est propulsé le long de la voie, sont en contact frottant et roulant avec l'arbre propulseur (2), chaque chariot ayant par ailleurs au moins une roue d'appui supérieure (7, 8) adaptée pour rouler librement sur une voie non entraînée, et espacée dudit arbre propulseur, le dispositif comprenant un premier moyen (11) placé à distance au-dessus dudit arbre propulseur et adapté pour soulever temporairement un chariot arrière (5), vu dans le sens de la propulsion (A), à l'aide de ses roues d'appui (8), de sorte que lesdits galets (6) du chariot (5) quittent l'arbre propulseur (2), caractérisé par un deuxième moyen (13) qui est relié au premier moyen (11) et par lequel ledit premier moyen peut être déplacé entre une première position, dans laquelle il ne gêne pas un chariot qui passe, et une deuxième position, dans laquelle le chariot est écarté du contact d'entraînement avec l'arbre propulseur (2).

5. Dispositif selon la revendication 4, dans lequel ledit premier moyen comprend un premier rail ou rail inférieur (11) qui s'étend semsiblement parallèlement audit arbre propulseur (2), et possède une voie de roulement (12) dirigée vers le haut pour lesdites roues d'appui (7, 8), et dans lequel ledit deuxième moyen comprend un deuxième rail ou rail supérieur (13) qui est placé à distance au-dessus dudit premier rail (11) et qui présente une voie de roulement (14) dirigée vers le bas, vers ledit premier rail (11) et destinée auxdites roues d'appui (7, 8), les deux rails (11, 13) et ledit arbre propulseur (12) étant placés sensiblement dans un plan vertical commun, et les deux rails (11, 13) étant montés à charnière et reliés entre eux de manière que leurs extrémités avant, vu dans le sens de la propulsion (A) puissent être soulevées sensiblement simultanément dans le sens qui s'éloigne dudit arbre propulseur (2) pour incliner lesdits rails (11, 13) par rapport audit arbre (2) dans ledit plan vertical.

6. Dispositif selon la revendication 5, dans lequel ladite opération de soulèvement est effectuée par le fait que les roues d'appui (7) dudit chariot avant (4) roulent sur la voie de roulement (14) dudit rail supérieur (13) qui est dirigée vers le bas, les galets (6) étant en contact roulant continu avec ledit arbre propulseur (2) tandis que les roues d'appui (8) du chariot arrière (5) roulent sur la voie de roulement (12) dudit rail inférieur (11) qui est dirigée vers le haut, les galets (6) étant hors de contact avec ledit arbre propulseur (2), en permettant ainsi la séparation des deux chariots (4, 5).

7. Dispositif selon la revendication 5 ou 6, dans lequel ledit rail supérieur (13), ou une partie avant de ce rail, est conçu de manière que la distance entre sa voie de roulement (14) dirigée vers le bas et ledit arbre propulseur (2) décroisse dans le sens de la propulsion (A).

8. Ensemble pour accumuler dans un magasin tampon une pluralité de chariots suspendus (32-34) inclus dans un système de convoyeur aérien, caractérisé en ce que ledit ensemble (30) comprend une pluralité de dispositifs séparateurs (10, 20) selon une quelconque des revendications 4-7.

9. Ensemble selon la revendication 8, dans lequel lesdits dispositifs séparateurs (10, 20) sont disposés pour se succéder directement et sont reliés mécaniquement en série de telle manière que les chariots puissent être évacués dudit ensemble (30) un à un, tandis que les autres chariots de l'ensemble peuvent être progressivement acheminés au dispositif séparateur situé dans une position antérieure.

10. Ensemble selon la revendication 8 ou 9, dans lequel le dispositif séparateur (20) extrême avant, vu dans le sens de la propulsion (A), comprend un moyen de commande (21) pour exécuter ladite opération de soulèvement du premier moyen (11').

11. Ensemble selon la revendication 10, comprenant un transducteur (23) qui, vu dans le sens de la propulsion (A), est placé en avant du dispositif séparateur extrême avant (20), et est adapté pour activer ledit moyen de commande (21) lorsque les chariots franchissent le transducteur au cours de leur propulsion.
